# EUROPEAN PATENT APPLICATION

(11) **EP 4 339 124 A1**
(43) Date of publication of application: **20.03.2024**
(21) Application number: 23020124.6
(22) Date of filing: 14.03.2023
(51) Int. Cl.: B65D 65/46

(54) **COMPOSTABLE PACKAGING AND METHOD OF MANUFACTURE**

(30) Priority: 05.09.2022 US 202217740078
(71) Applicant: Crain, Chrystal, Arlington, TX 76011 (US); Lankford, Cheryl, Arlington, TX 76011 (US); Hernandez, Fernando Tejeda, 44940 Guadalajara, Jal. (MX); Morales, Fernando Tejeda, 44940 Guadalajara, Jal. (MX)
(72) Inventor: Crain, Chrystal, Arlington, TX 76011 (US); Lankford, Cheryl, Arlington, TX 76011 (US); Hernandez, Fernando Tejeda, 44940 Guadalajara, Jal. (MX); Morales, Fernando Tejeda, 44940 Guadalajara, Jal. (MX)
(74) Representative: Pintz, György

(57) **Abstract**

A substantially wholly compostable packaging for containing one or more items therein and method of manufacture thereof, are disclosed. The compostable packaging is made of a composite consisting essentially of at least approximately 100% cornstarch. Compostable ink may be printed onto the compostable packaging to present information about the one or more items contained within the packaging and about the composability of the packaging.

## Description

### BACKGROUND

### 1. Field of the Invention

The present invention relates generally to packaging, and more specifically to a cornstarch-based compostable packaging adapted to contain one or more items therein.

### 2. Description of Related Art

Packaging is well known in the art and are effective means to contain items therein. Common forms of packaging include bags, wraps and containers that are adapted for storing, transporting, and/or displaying items. Unfortunately, however, one of the problems associated with common packaging is their use of petrochemical-based plastics. Petrochemical-based plastics are often considered non-biodegradable nor non compostable. While some petrochemical-based plastics are recyclable, a large majority of packaging using petrochemical-based plastics end up in landfills, contributing significantly to global pollution. Thus, it would be advantageous and desirable to have packaging that does not use petrochemical-based plastics and does not contaminate the environment.

Accordingly, it is an object of the present invention to provide a compostable packaging that does not contaminate the environment.

### DESCRIPTION OF THE DRAWINGS

The novel features believed characteristic of the embodiments of the present application are set forth in the appended claims. However, the embodiments themselves, as well as a preferred mode of use, and further objectives and advantages thereof, will best be understood by reference to the following detailed description when read in conjunction with the accompanying drawings, wherein:
FIG. 1 is a front view of an assembled compostable packaging in accordance with one or more embodiments of the present invention; and
FIG. 2 is a flowchart of a method of manufacturing a compostable packaging in accordance with one or more embodiments of the present invention.

While the system and method of use of the present application is susceptible to various modifications and alternative forms, specific embodiments thereof have been shown by way of example in the drawings and are herein described in detail. It should be understood, however, that the description herein of specific embodiments is not intended to limit the invention to the particular embodiment disclosed, but on the contrary, the intention is to cover all modifications, equivalents, and alternatives falling within the spirit and scope of the present application as defined by the appended claims.

### DETAILED DESCRIPTION OF THE PREFERRED EMBODIMENT

Illustrative embodiments of the system and method of use of the present application are provided below. It will of course be appreciated that in the development of any actual embodiment, numerous implementation-specific decisions will be made to achieve the developer's specific goals, such as compliance with system-related and business-related constraints, which will vary from one implementation to another. Moreover, it will be appreciated that such a development effort might be complex and time-consuming, but would nevertheless be a routine undertaking for those of ordinary skill in the art having the benefit of this disclosure.

The system and method of use in accordance with the present application overcomes one or more of the above-discussed problems commonly associated with conventional packaging. Specifically, the present invention provides for packaging that is substantially wholly compostable, thereby reducing pollution in the environment. These and other unique features of the system and method of use are discussed below and illustrated in the accompanying drawings.

The system and method of use will be understood, both as to its structure and operation, from the accompanying drawings, taken in conjunction with the accompanying description. Several embodiments of the system are presented herein. It should be understood that various components, parts, and features of the different embodiments may be combined together and/or interchanged with one another, all of which are within the scope of the present application, even though not all variations and particular embodiments are shown in the drawings. It should also be understood that the mixing and matching of features, elements, and/or functions between various embodiments is expressly contemplated herein so that one of ordinary skill in the art would appreciate from this disclosure that the features, elements, and/or functions of one embodiment may be incorporated into another embodiment as appropriate, unless described otherwise.

The preferred embodiment herein described is not intended to be exhaustive or to limit the invention to the precise form disclosed. It is chosen and described to explain the principles of the invention and its application and practical use to enable others skilled in the art to follow its teachings.

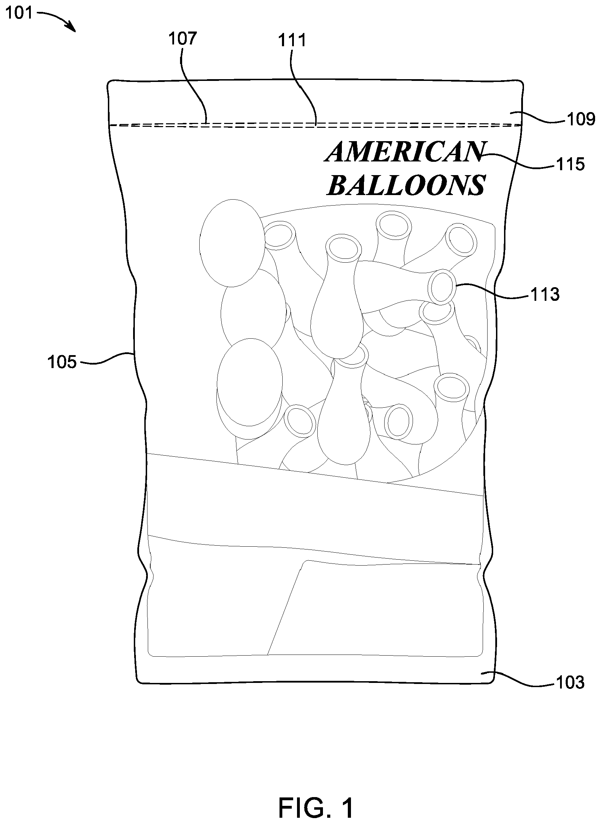

Referring now to the drawings wherein like reference characters identify corresponding or similar elements throughout the several views, FIG. 1 depicts a front view of an assembled compostable packaging 101 in accordance with one or more embodiments of the present application. It will be appreciated that the compostable packaging 101 overcomes one or more of the above-listed problems commonly associated with conventional packaging.

In the contemplated embodiment, the compostable packaging 101 comprises a bottom portion 103 and a plurality of side walls 105 extending upwardly from the bottom portion 103 toward an open top portion 107 that is closed through sealing 109. The plurality of side walls 105 also defines an interior cavity 111 therebetween. Prior to sealing the open top portion 107 closed, one or more items 113 may be placed into the interior cavity 111.

The compostable packaging 101 is formed by thermally molding a composite, the composite consisting essentially of at least approximately 100% cornstarch.

In some embodiments, the compostable packaging 101 also includes compostable ink 115 printed thereon. It should be appreciated that the compostable ink 115 may print color, graphic indicia, or other indicia to present information. The information may include information regarding the composability standards of the compostable packaging 101, product information of the one or more items 113, a vendor's name and/or trademark, and the like.

It should be appreciated that although the compostable packaging 101 is shown to have an elongate shape, it is contemplated that the compostable packaging 101 may be provided in other suitable shapes (e.g., rectangular, triangular, spherical, other polygonal shape, or any other appropriate geometry).

It should also be appreciated that the one or more items 113 contained within the compostable packaging 101 may be toys, food products, medication, cosmetics, or any other form of products.

It should also be appreciated that one of the unique features believed characteristic of the present application is the utilization of at least approximately 100% cornstarch to form the compostable packaging 101 which provides for an environmentally friendly alternative to petrochemical-based plastic packaging that is substantially wholly compostable.

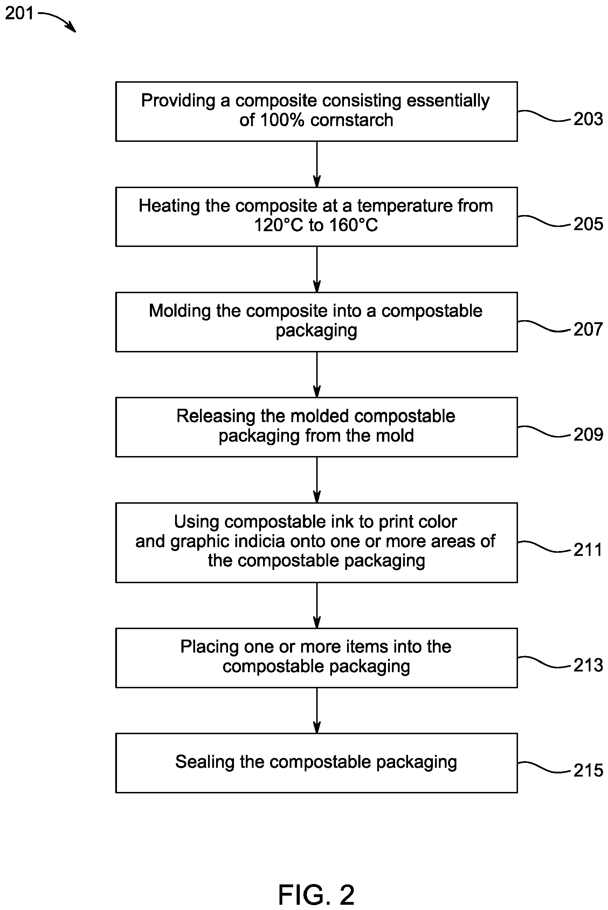

Referring now to FIG. 2, a flowchart 201 depicts a method of manufacturing a compostable packaging. First, a composite consisting essentially cornstarch is provided, as shown with box 203. The composite has at least approximately 100% cornstarch by weight.

Next, the composite is heated at a temperature from approximately 120°C to approximately 160°C, as shown with box 205.

Then, the composite is molded into a compostable packaging, as shown with box 207. The compostable packaging includes a bottom portion and a plurality of side walls extending upwardly from the bottom portion toward an open top portion. The plurality of side walls also defines an interior cavity therebetween.

Next, the molded compostable packaging is released from the mold, as shown with box 209.

Then, compostable ink is used to print color and graphic indicia onto one or more areas of the compostable packaging, as shown with box 211. The color and graphic indicia can depict information regarding the composability standards of the compostable packaging, product information of items contained within the compostable packaging, a vendor's name and/or trademark, and the like.

Next, one or more items are placed into the compostable packaging via the open top portion, as shown with box 213.

Then, the compostable packaging is sealed, as shown with box 215. The sealing engages the extended ends of the plurality of side walls to close the top portion of the compostable packaging and ultimately containing the one or more items within the interior cavity.

The particular embodiments disclosed above are illustrative only, as the embodiments may be modified and practiced in different but equivalent manners apparent to those skilled in the art having the benefit of the teachings herein. It is therefore evident that the particular embodiments disclosed above may be altered or modified, and all such variations are considered within the scope and spirit of the application. Accordingly, the protection sought herein is as set forth in the description. Although the present embodiments are shown above, they are not limited to just these embodiments, but are amenable to various changes and modifications without departing from the spirit thereof.

## Claims

1. A substantially wholly compostable packaging to contain one or more items therein, the compostable packaging made from a composite consisting essentially of:
at least approximately 100% corn starch, by weight.

2. A substantially wholly compostable packaging to contain one or more items therein, the compostable packaging made from a composite consisting essentially of:
at least approximately 100% corn starch, by weight; and
compostable ink;
wherein the compostable ink is used to present information about the one or more items contained within the packaging and about the composability of the packaging;
wherein the compostable ink includes color and graphic indicia.

3. A method for manufacturing a substantially wholly compostable packaging to contain one or more items therein, the method comprising:
providing a composite consisting essentially of:
at least approximately 100% cornstarch, by weight;
heating the composite at a temperature from approximately 120°C to approximately 160°C;
molding the composite into a compostable packaging, the compostable packaging including:
a bottom portion; and
a plurality of side walls extending upwardly from the bottom portion toward an open top portion;
wherein the plurality of side walls defines an interior cavity therebetween;
releasing the molded compostable packaging from the mold;
printing color and graphic indicia onto an area of the compostable packaging;
placing one or more items into the interior cavity of the compostable packaging; and
sealing the extended ends of the plurality of sidewalls to close the top portion of the compostable packaging, leaving the one or more items contained within the interior cavity of the compostable packaging;
wherein the compostable ink presents information about the one or more items contained within the packaging and about the composability of the packaging.
